# EUROPEAN PATENT APPLICATION

(11) **EP 4 768 770 A1**
(43) Date of publication of application: **01.07.2026**
(21) Application number: 24864087.2
(22) Date of filing: 13.05.2024
(51) Int. Cl.: F16L 37/367, F16L 37/107

(54) **CONNECTING END, FLUID CONNECTOR, AND LIQUID COOLING DEVICE**

(30) Priority: 15.09.2023 CN 202311204170
(71) Applicant: Shenzhen Envicool Intelligent Connection Technology Co., Ltd., Shenzhen, Guangdong 518000 (CN)
(72) Inventor: CHEN, Gang, Guangdong 518000 (CN)
(74) Representative: Torggler & Hofmann Patentanwälte - Innsbruck
(86) International application number: PCT/CN2024/092827
(87) International publication number: WO 2025/055362

(57) **Abstract**

A connecting end, a fluid connector, and a liquid cooling device. The connecting end comprises a valve seat (100) and a valve core (200), wherein a flow channel (110) is formed in the valve seat, and the valve seat is provided with connecting portions (120), and can be configured to be fitted to the valve seat of another connecting end to form the fluid connector; the valve core is rotatably arranged in the valve seat; a through hole (210) and first notches (220) are formed in the valve core; and the first notches can be used for allowing the connecting portions of another valve seat to be inserted, such that the valve core of the valve seat can rotate along with rotation of the connecting portions of the another valve seat, and the through hole can be at least partially communicated with the flow channel by means of the rotation of the valve core. In the connecting end, the fluid connector, and the liquid cooling device, a straight-through type fluid flow channel can be formed, a valve core or a valve rod is no longer present in the fluid flow channel, and therefore, fluid resistance in the flow channel can be reduced, thereby reducing pressure loss. Additionally, two matched connecting ends can use a same structure, thereby reducing production costs.

## Description

This application claims priority to Chinese Patent Application No. 202311204170.7, titled "CONNECTING END, FLUID CONNECTOR, AND LIQUID COOLING DEVICE", filed on September 15, 2023 with the China National Intellectual Property Administration, which is incorporated herein by reference in its entirety.

### FIELD

The present application relates to the technical field of connectors, and in particular, to a connecting end, a fluid connector, and a liquid cooling device.

### BACKGROUND

At present, the Internet of Everything imposes ever-increasing demands on the computing speed of various chips, which leads to higher heat dissipation requirements for chips. Conventional air cooling can no longer meet the heat dissipation requirements for chips, and various new types of fluid coolers will soon become the mainstream for chip cooling The various chip coolers are connected to fluid sources by fluid connectors.

The fluid connector in the industry is divided into male and female ends. When disconnected from a fluid source, the male and female ends are sealed independently to prevent fluid from leaking and spraying. When the male and female ends are coupled by insertion, their respective sealing structures are opened, allowing the fluid source to communicate with the fluid cooler. The fluid then circulates to take away heat, achieving efficient heat dissipation.

During implementation of the present application, it is found that there are at least the following issue in the conventional technology.

A conventional fluid connector contains a valve core or a valve stem in the middle of its flow channel, creating large fluid resistance in the flow channel. This results in substantial pressure loss at the outlet and inlet of the connector, which seriously affects the heat dissipation effect.

In summary, how to effectively address the issue of significant pressure loss at the outlet and inlet of the fluid connector due to the large fluid resistance in the flow channel is a problem that needs to be solved by those skilled in the art.

### SUMMARY

In view of this, objects of the present application are to provide a connecting end, a fluid connector, and a liquid cooling device, which can address the issue of significant pressure loss at the outlet and inlet of the conventional fluid connector due to large fluid resistance in the flow channel.

In order to achieve the above objects, the following technical solutions are provided according to the present application.

A connecting end includes:
a valve seat having a flow channel therein and an end face that is provided with a connecting portion, where the valve seat is configured to mate and connect with a valve seat of another connecting end to form a fluid connector; and
a valve core rotatably arranged in the valve seat, where the valve core is provided with a through hole and a first groove, the first groove is configured for insertion of a connecting portion of the valve seat of the another connecting end, the valve core of the valve seat is configured to be rotated by rotation of the connecting portion of the valve seat of the another connecting end to allow communication between at least part of the through hole and at least part of the flow channel.

Optionally, in the connecting end, the through hole is eccentrically formed in the valve core.

Optionally, in the connecting end, the valve core is configured to be rotated by the connecting portion of the another connecting end, which is inserted into the first groove, under an action of an external force. The connecting end is opened when the valve core rotates to a position where at least part of the through hole is in communication with at least part of the flow channel, and the connecting end is closed when the valve core rotates to a position where the through hole is isolated from the flow channel.

Optionally, in the connecting end, the end face is further provided with an engagement slot, and the engagement slot is configured to allow the connecting portion of the another connecting end to be inserted into the first groove and rotate along the engagement slot, and to axially lock the two valve seats of the two connecting ends.

Optionally, in the connecting end, a notch is provided at an end of a side wall of the connecting portion close to the end face, and the engagement slot includes an insertion/removal section and a locking section connected to each other. A width of the insertion/removal section is greater than a width of the locking section. The insertion/removal section is configured for insertion and removal of the connecting portion of the valve seat of the another connecting end, and the locking section is configured to engage with a notch of the connecting portion of the valve seat of the another connecting end.

Optionally, in the connecting end, the valve seat is provided with a first pin that is retractable, and the first pin is configured to be inserted into the first groove when the valve core rotates to a position where the first groove is aligned with the insertion/removal section.

Optionally, in the connecting end, the valve seat is provided with a first mounting groove. The first pin includes a first slider and a first elastic member. The first slider is slidably mounted in the first mounting groove. The first elastic member is arranged between the first slider and the first mounting groove and is configured to push the first slider into the first groove.

Optionally, in the connecting end, the valve seat is provided with a second pin that is retractable, and the valve core is further provided with a second groove. The second pin is configured to be inserted into the second groove when the valve core rotates to a position where the through hole is aligned with the flow channel.

Optionally, in the connecting end, the valve seat is provided with a second mounting groove. The second pin includes a second slider and a second elastic member. The second slider is slidably mounted in the second mounting groove. A part of the second slider is located outside the valve seat. The second elastic member is arranged between the second slider and the second mounting groove and is configured to push the second slider into the second groove.

Optionally, in the connecting end, the part of the second slider located outside the valve seat is configured to serve as an operating part, and the second slider is configured to be disengaged from the second groove by moving the operating part.

Optionally, in the connecting end, the end face is further provided with a first sealing ring configured to sealingly couple with the another connecting end. The first sealing ring is provided with a first communication hole in communication with the flow channel.

Optionally, in the connecting ends, second sealing rings are provided in the valve seat at positions corresponding to both ends of the valve core, respectively. Each of the second sealing rings is provided with a second communication hole in communication with the flow channel.

Optionally, in the connecting end, the valve seat includes a valve body and a valve cover connected to the valve body.

The end face is located on the valve cover. The connecting portion and the engagement slot are arranged close to an edge of the end face. The number of the connecting portion and the number of the engagement slot are both two.

The flow channel includes a valve body flow passage provided in the valve body and a valve cover flow passage provided in the valve cover. The valve body and the valve cover define an accommodating cavity. The valve core is arranged in the accommodating cavity, and is sealed against the valve body and the valve cover.

Optionally, in the connecting end, the valve body is in interference fit with the valve cover, and a steel ball is provided on a circumferential surface of the valve body or a circumferential surface of the valve cover where the valve body is coupled with the valve cover.

Compared with the conventional technology, the connecting end according to the present application has at least the following beneficial effects.

The connecting end according to the present application includes the valve seat and the valve core. The flow channel is provided in the valve seat, and the connecting portion is arranged on the end face of the valve seat. The valve seat is configured to match and connect with the valve seat of the another connecting end to form the fluid connector. The valve core is rotatably arranged in the valve seat, and the valve core is provided with the through hole and the first groove. The first groove is configured for insertion of the connecting portion of the valve seat of the another connecting end. The valve core of the valve seat can be driven to rotate by the rotation of the connecting portion of the valve seat of the another connecting end, to make at least part of the through hole to communicate with at least part of the flow channel.

With the connecting end according to the present application, the valve seat can mate and connect with the valve seat of another connecting end. When the connecting end is connected with the another connecting end, the valve seats of the two connecting ends are matched and connected. The connecting portion of the connecting end is inserted into the first groove of the another connecting end, and the connecting portion of the another connecting end is inserted into the first groove of the connecting end. Upon rotating the two connecting ends, the connecting portion of each of the two connecting ends rotates relative to the other of the two connecting ends and drives the valve core of the other of the two connecting ends to rotate, so that the valve core of each of the two connecting ends is rotate to a position where at least part of the through hole is communicated with at least part of the flow channel, thereby opening and communicating the two connecting ends. To disconnect them, the connecting portions are rotated opposite to the directions in which they are connected, driving the respective valve cores to rotate, so that the through holes of the valve cores are not communicated with the respective flow channels, thereby closing the two connecting ends. Then the two connecting ends are disconnected. According to the connecting end provided in the present application, a straight-through fluid flow channel is formed when the valve core rotates to a position where at least part of the through hole is communicated with at least part of the flow channel. As there is no valve core or valve stem in the flow channel, fluid resistance in the flow channel can be decreased, thereby reducing pressure loss. In summary, the connecting end according to the present application can mitigate the issue of substantial pressure loss at the outlet and inlet of the conventional fluid connector due to high fluid resistance in the flow channel.

In order to achieve the above objects, the following technical solution is provided according to the present application.

A fluid connector includes a male end and a female end. Each of the male end and the female end is the connecting end described in any of the above solutions. The connecting portion of the male end is configured to be inserted into the first groove of the female end, and the connecting portion of the female end is configured to be inserted into the first groove of the male end. When the male end and the female end rotate relative to each other, the connecting portion of the male end is configured to drive the valve core of the female end to rotate, and the connecting portion of the female end is configured to drive the valve core of the male end to rotate, so as to synchronously open or close the male end and the female end.

As the connecting end has the above-mentioned technical effects, the fluid connector including the connecting end also has the corresponding technical effects.

In order to achieve the above objects, a liquid cooling device is further provided according to the present application, which includes the fluid connector or the connecting end described in any of the above solutions. As the fluid connector or connecting end has the above-mentioned technical effects, the liquid cooling device including the fluid connector or connecting end also has the corresponding technical effects.

### BRIEF DESCRIPTION OF THE DRAWINGS

In order to more clearly illustrate the technical solutions in the embodiments of the present application or in the conventional technology, the drawings used for the description of the embodiments or the conventional technology are briefly introduced below. Apparently, the drawings described below illustrate merely some of the embodiments of the present application, and those skilled in the art can obtain other drawings based on these drawings without inventive effort.
FIG. 1 is a schematic structural view of a connecting end according to a specific embodiment of the present application;
FIG. 2 is a schematic view of the connecting end in an open state;
FIG. 3 is an exploded schematic structural view of FIG. 2;
FIG. 4 is a schematic view of the connecting end in a closed state;
FIG. 5 is an exploded schematic structural view of FIG. 4;
FIG. 6 is a schematic view of two connecting ends in a mating state;
FIG. 7 is a schematic view of two connecting ends in a separated state;
FIG. 8 is a schematic cross-sectional view showing coupling between a connecting portion and an engagement slot;
FIG. 9 is a schematic view showing a first coupling state of the connecting portion and the engagement slot;
FIG. 10 is a schematic view showing a second coupling state of the connecting portion and the engagement slot;
FIG. 11 is a schematic structural view of a valve core;
FIG. 12 is a schematic view showing assembly of a first pin; and
FIG. 13 is a schematic view showing assembly of a second pin.

The reference numerals in the drawings are listed as follows:

| | | | |
|---|---|---|---|
| 100 | valve seat, | 100a | end face, |
| 110 | flow channel, | 120 | connecting portion, |
| 130 | engagement slot, | 121 | notch, |
| 131 | insertion/removal section, | 132 | locking section, |
| 140 | first pin, | 150 | first mounting groove, |
| 141 | first slider, | 142 | first elastic member, |
| 160 | second pin, | 170 | second mounting groove, |
| 161 | second slider, | 162 | second elastic member, |
| 180 | steel ball, | 101 | valve body, |
| 102 | valve cover, | 111 | valve body flow passage, |
| 112 | valve cover flow passage; | 200 | valve core, |
| 210 | through hole, | 220 | first groove, |
| 230 | second groove; | 300 | first sealing ring, |
| 310 | first communication hole, | 400 | second sealing ring, |
| 410 | second communication hole. | | |

### DETAILED DESCRIPTION OF THE EMBODIMENTS

In the conventional technology, a conventional fluid connector contains a valve core or a valve stem in the middle of its flow channel, which leads to significant fluid resistance in the flow channel. This results in substantial pressure loss at the outlet and inlet of the connector, seriously affecting the heat dissipation effect. In addition, the male end and the female end are completely different and have different assembly parts, approximately doubling the number of components compared to a single valve, thus increasing manufacturing cost.

To address the above issues, a connecting end, a fluid connector, and a liquid cooling device are provided according to the embodiments of the present application, which can solve the problem of significant pressure loss at the outlet and inlet of the conventional fluid connector due to high fluid resistance in the flow channel, and reduce the manufacturing cost.

The technical solutions in the embodiment of the present application are clearly and completely described below with reference to the accompanying drawings. Apparently, the described embodiments are only some of the embodiments of the present application, rather than all of the embodiments. Based on the embodiments in the present application, all other embodiments obtained by those skilled in the art without creative labor fall within the protection scope of the present application.

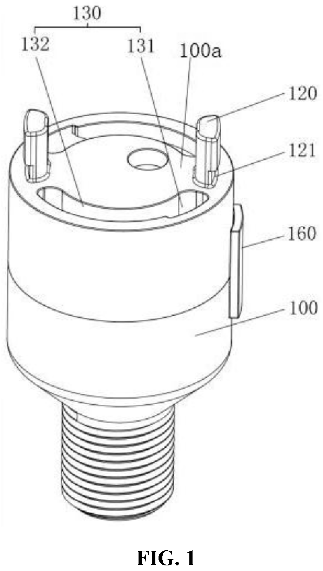

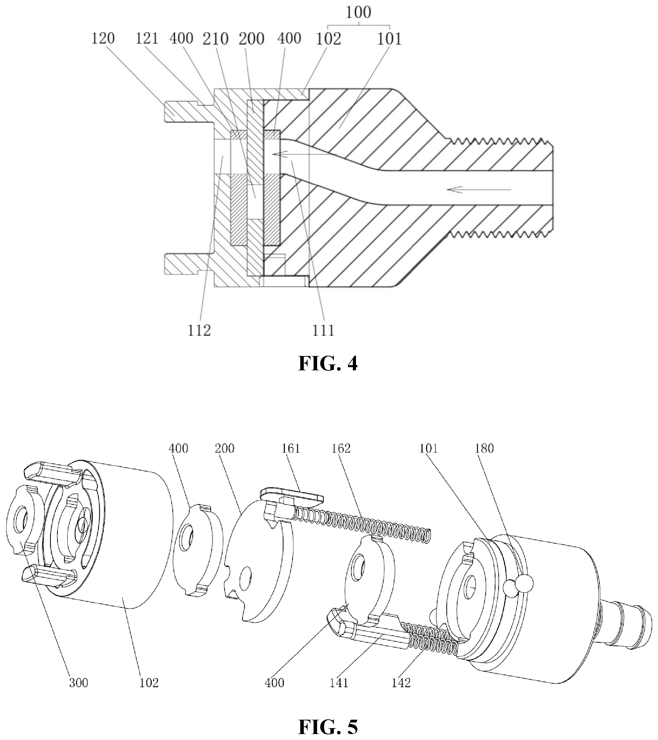

Referring to FIGS. 1 to 5, in some embodiments, the connecting end according to the present application includes a valve seat 100 and a valve core 200. A flow channel 110 is defined in the valve seat 100. The valve seat 100 is configured to mate and connect with a valve seat 100 of another connecting end to form a fluid connector. The connection manner between the two valve seats 100 is not specifically limited herein. It can be understood that, the flow channel 110 extends to an end face 100a of the valve seat 100, so that the flow channels 110 of the two valve seats 100 can be communicated with each other. The valve core 200 is rotatably arranged in the valve seat 100. The valve core 200 is provided with a through hole 210. The valve core 200 is configured to rotate to allow at least part of the through hole 210 to be communicated with at least part of the flow channel 110. Specifically, the connecting end is opened when the valve core 200 rotates to a position where the through hole 210 faces the flow channel 110, and the connecting end is closed when the valve core 200 rotates to a position where the through hole 210 is offset from the flow channel 110. It can be understood that, the through hole 210 of the valve core 200 facing the flow channel 110 refers to that at least part of the through hole 210 is communicated with at least part of the flow channel 110, so that a fluid in the flow channel 110 can flow from one end of the flow channel 110 to the other end of the flow channel 110 through the through hole 210, that is, the connecting end is opened. The through hole 210 of the valve core 200 being offset from the flow channel 110 refers to that the through hole 210 is not communicated with the flow channel 110, i.e., the through hole 210 is completely staggered relative to the flow channel 110, so that the fluid in the flow channel 110 is blocked by the valve core 200 and cannot circulate, that is, the connecting end is closed. The end face 100a of the valve seat 100 is provided with a connecting portion 120, and the valve core 200 is provided with a first groove 220 configured for insertion of a connecting portion 120 of the valve seat 100 of the another connecting end. The valve core 200 of the valve seat 100 can be rotated by rotation of the connecting portion 120 of the valve seat 100 of the another connecting end, that is, the valve core 200 is driven by the connecting portion 120 of the another connecting end, and the rotation of the valve core 200 can allow at least part of the through hole 210 to be communicated with at least part of the flow channel 110. The shape of the connecting portion 120 matches the shape of the first groove 220, so that when the two connecting ends are mutually inserted, the connecting portion 120 of one of the two connecting ends is inserted into the first groove 220 of the other of the two connecting ends, and the rotation of the valve seat 100 causes the connecting portion 120 to rotate accordingly, thereby driving the valve core 200 of the other of the two connecting ends to rotate, so as to switch the connecting end between an open state and a closed state.

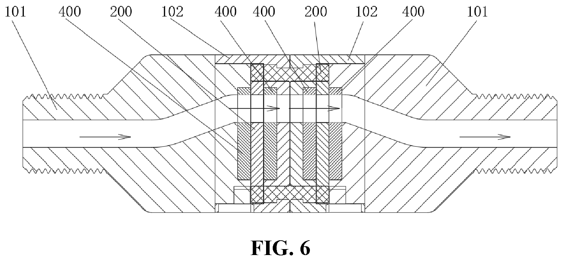

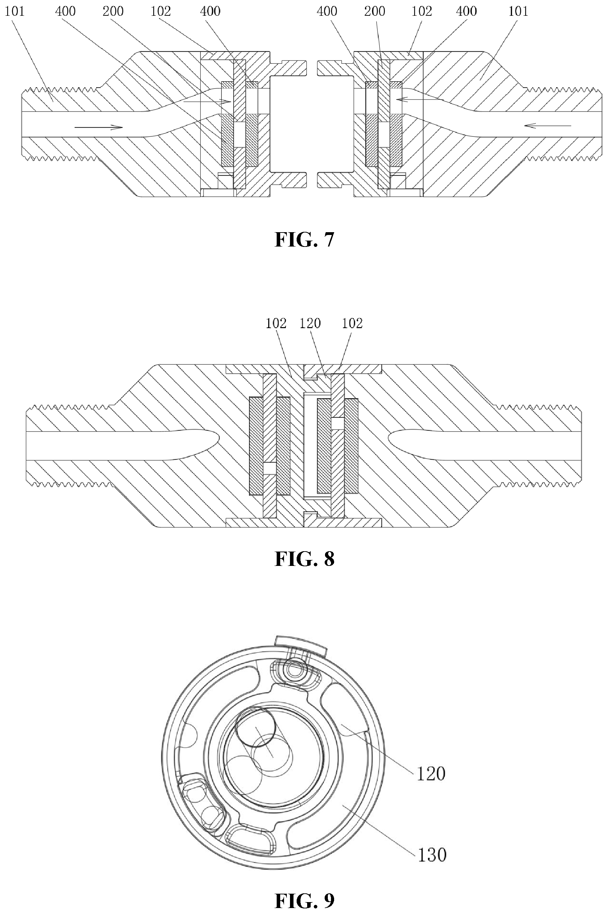

With the connecting end according to the present application, the valve seat 100 is configured to mate and connect with the valve seat 100 of another connecting end. When the connecting end is not connected to the another connecting end, the through hole 210 of the valve core 200 of the connecting end is not communicated with the flow channel 110, that is, the connecting end is in a closed state. When the connecting end is connected to the another connecting end, the valve seats 100 of the two connecting ends are mated and connected with each other. The connecting portion 120 of the connecting end is inserted into the first groove 220 of the another connecting end, and the connecting portion 120 of the another connecting end is inserted into the first groove 220 of the connecting end. When rotating the two connecting ends, the connecting portion 120 of each of the two connecting ends rotates relative to the other of the two connecting ends and drives the valve core 200 of the other of the two connecting ends to rotate, so that the valve core of each of the two connecting ends rotates to the position where at least part of the through hole 210 is communicated with at least part of the flow channel 110, thus opening and connecting the two connecting ends, as shown in FIG. 6. To disconnect the connecting ends, the connecting portions 120 are rotated in directions opposite to those employed during connection, and drive the respective valve cores 200 to rotate, so that the through holes 210 of the valve cores 200 are not communicated with the respective flow channels 110, thereby closing the two connecting ends. Then the two connecting ends can be disconnected, as shown in FIG. 7. According to the connecting end provided in the present application, when the valve core 200 of the connecting end rotates to the position where at least part of the through hole 210 is communicated with at least part of the flow channel 110, a straight-through fluid flow channel is formed. There is no valve core or valve stem in the fluid flow channel, so that the fluid resistance in the flow channel can be decreased, thus reducing the pressure loss. In summary, the connecting end according to the present application can address the issue of significant pressure loss at the outlet and inlet of the conventional fluid connector due to high fluid resistance in the flow channel. Moreover, the two mating connecting ends can adopt the same structure, thus reducing manufacturing cost. Furthermore, the use of the valve core 200 simplifies the sealing structure and mating operation.

In some embodiments, the valve core 200 may be of a plate-like structure. The plate-like structure occupies little space and facilitates assembly with the valve seat 100. In other embodiments, the valve core 200 may be in a block shape or other shapes.

In some embodiments, the through hole 210 is eccentrically arranged in the valve core 200, that is, the through hole 210 is not located at the center of the valve core 200, i.e., the through hole 210 is an eccentric hole. Accordingly, a position of an opening of the flow channel 110 towards the through hole 210 corresponds to a position of the through hole 210. When the valve core 200 rotates around its central axis, the through hole 210 can rotate with the valve core 200 to a position where it is at least partially communicated with at least part of the flow channel 110 or a position where it is isolated from the flow channel 110, thereby opening or closing the connecting end. In other embodiments, the through hole 210 is not limited to being located at an eccentric position on the valve core 200. For example, in a case where the rotation of the valve core 200 is eccentric, the through hole 210 may alternatively be located at the center of the valve core 200.

In some embodiments, the connecting portion 120 of the another connecting end inserted into the first groove 220 can drive the valve core 200 to rotate under the action of an external force. The connecting end is opened when the valve core 200 rotates to a position where at least part of the through hole 210 is communicated with at least part of the flow channel 110, and the connecting end is closed when the valve core 200 rotates to a position where the through hole 210 is isolated from the flow channel 110. That is, the external force is applied on the connecting portion 120 of the another connecting end to rotate the connecting portion 120, and the rotation of the connecting portion 120 drives the corresponding valve core 200 to rotate. The connecting end is switched between the open state and the closed state by the rotation of the valve core 200.

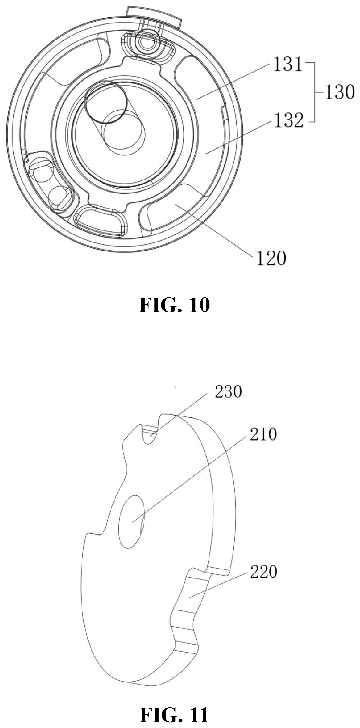

In some embodiments, referring to FIGS. 1 and 8 to 10, the end face 100a is further provided with an engagement slot 130. The first groove 220 is aligned with the engagement slot 130. The engagement slot 130 is configured to allow the connecting portion 120 of the another connecting end to be inserted into and rotate along the engagement slot 130, and to axially lock the two valve seats 100 of the two connecting ends. It can be understood that, the first groove 220 being aligned with the engagement slot 130 refers to that the connecting portion 120 of the another connecting end can pass through the engagement slot 130 to be inserted into the first groove 220, so that the connecting portion 120 of the another connecting end can not only be coupled with the engagement slot 130 to axially lock the two valve seats 100 of the two connecting ends, but also drive the valve core 200 to rotate. The two valve seats 100 being axially locked refers to that the two valve seats 100 are limited in the axial direction, remain connected and are prevented from separation, and they can rotate relative to each other circumferentially, so that the connecting portions 120 can drive the respective valve cores 200 to rotate. The valve seat 100 with the above arrangement is used not only to provide a driving force for the rotation of the valve core 200, but also to provide an axial connecting force for the two connecting ends. Specifically, the engagement slot 130 may be arc-shaped, and the connecting portion 120 moves along the arc-shaped engagement slot 130 when rotating with the valve seat 100. To connect the two connecting ends, the two valve seats 100 are respectively held by two hands, the connecting portion 120 of each of the valve seats 100 is inserted into the corresponding engagement slot 130 of the other of the valve seats 100, and the two hands rotate in opposite directions. In this way, the connecting portion 120 of each connecting end drives the valve core 200 of the opposite connecting end to rotate until the through holes 210 of the valve cores 200 correspond to the respective flow channels 110, and the two connecting ends are simultaneously opened. To disconnect the two connecting ends, the valve seats 100 are rotated opposite to their respective directions of connection. The connection is realized through the coupling of the engagement slot 130 and the connecting portion 120. The connecting portion 120 is fixedly arranged at the valve seat 100, and the rotation of the valve seat 100 drives the connecting portion 120 to rotate. The structure is simple, the connection is reliable, and the two connecting ends can be conveniently inserted into and separated from each other.

In some embodiments, each valve seat 100 is provided with two connecting portions 120 and two engagement slots 130. Alternatively, in some other embodiments, the number of the connecting portion 120 provided at each valve seat 100 may not be two, and the number of the engagement slot 130 provided at each valve seat 100 may not be two.

In some embodiments, an end of a side wall of the connecting portion 120 close to the end face 100a is provided with a notch 121. The engagement slot 130 includes an insertion/removal section 131 and a locking section 132 connected to each other. A width of the insertion/removal section 131 is greater than that of the locking section 132. The insertion/removal section 131 is configured for insertion and removal of the connecting portion 120 of the another valve seat 100. The locking section 132 is configured for engagement with a notch 121 of the connecting portion 120 of the another valve seat 100. The notch 121 is arranged at the end of the side wall of the connecting portion 120 close to the end face 100a of the valve seat 100, so as to form a stepped surface. The connecting portion 120 can be inserted into the engagement slot 130 at the insertion/removal section 131, and rotate along the engagement slot 130. When the connecting portion 120 rotates from the insertion/removal section 131 to the locking section 132, the locking section 132 engages with the notch 121. That is, the end face forming the locking section 132 abuts against the stepped surface of the connecting portion 120, thereby preventing axial movement of the connecting portion 120 relative to the valve seat 100 of the opposite connecting end, achieving effective locking of the two valve seats 100. With the arrangements of the engagement slot 130 and the connecting portion 120 described above, the structure is simple and the coupling is reliable. In a case that the connecting end is disconnected and needs to be closed, it can be understood that, when the first groove 220 of the valve core 200 corresponds to the insertion/removal section 131, the through hole 210 is isolated from the flow channel 110, and the valve core 200 is in a closed state. That is, when the valve core 200 of the connecting end is in the closed state, the connecting portion 120 of another connecting end can be inserted into the insertion/removal section 131 of the connecting end and into the first groove 220. A length of the insertion/removal section 131 is specifically the same as a width of the connecting portion 120. While meeting the insertion/removal requirements, this configuration also ensures that, during the rotation of the connecting portion 120 to open and close the connecting end, throughout most of the rotation stroke of the connecting portion 120, the two valve seats 100 are axially locked relative to each other, which further facilitates the rotation operation and improves the reliability of the whole fluid connector. In other embodiments, the engagement slot 130 may be of other shapes for that can engage with a boss.

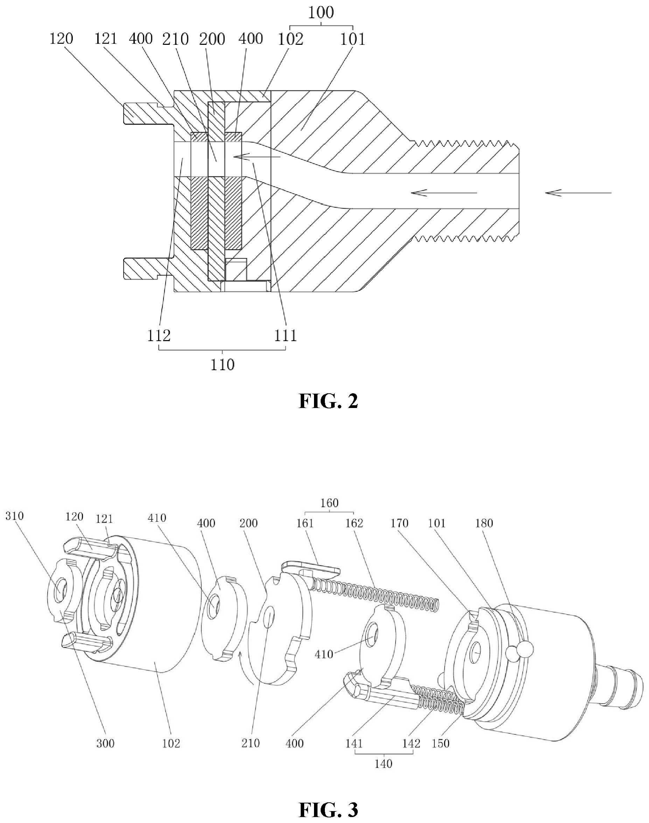

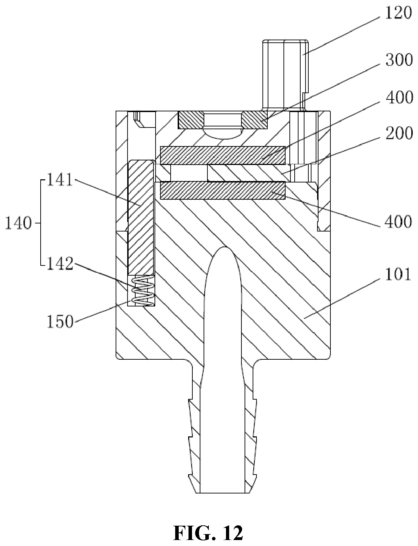

In some embodiments, referring to FIGS. 2, 3, 11, and 12, the valve seat 100 is provided with a first pin 140 that is retractable. When the valve core 200 rotates to a position where the first groove 220 is aligned with the insertion/removal section 131, the first pin 140 can be inserted into the first groove 220. By reusing the first groove 220 of the valve core 200, when the first groove 220 of the valve core 200 is misaligned with the insertion/removal section 131, the valve core 200 can abut against the first pin 140 to prevent the first pin 140 from extending outward towards the valve core 200. When the valve core 200 rotates to a position where the first groove 220 is aligned with the insertion/removal section 131, the first groove 220 is aligned with the first pin 140, and the valve core 200 no longer restricts the position of the first pin 140, so that the first pin 140 can automatically extend out to be inserted into the first groove 220 after the connecting portion 120 is disengaged from the first groove 220, which can not only lock the valve core 200 at an initial position for mutual insertion of the connecting ends, but also provide a cue indicating the rotational position of the valve core 200 during the insertion/removal operation. This leads to a simple structure and ensures precision of positioning.

Specifically, when the valve core 200 rotates 90 degrees clockwise from the initial position, the position of the through hole 210 of the valve core 200 is aligned with the position of the flow channel 110, a passage is formed through the entire flow channel 110, and the connector is in an open state.

In some embodiments, the first groove 220 runs from one end of the valve core 200 to the other end of the valve core 200. The valve seat 100 is provided with a first pin 140 that is retractable. The first pin 140 can be inserted into the corresponding first groove 220 when the valve core 200 rotates to a position where the first groove 220 is aligned with the insertion/removal section 131. In an initial state, the first groove 220 of the valve core 200 is aligned with the insertion/removal section 131, and the first pin 140 is inserted in the first groove 220. When the two connecting ends are mutually inserted, the connecting portion 120 of the opposite connecting end is inserted into the first groove 220, thereby ejecting the first pin 140, that is, the first pin 140 is retracted out of the first groove 220. As the connecting portion 120 of the opposite connecting end drives the valve core 200 to rotate, the first pin 140 abuts against the valve core 200, preventing the first pin 140 from extending out. When the valve core 200 rotates to a position where the first groove 220 is aligned with the insertion/removal section 131, the valve core 200 no longer restricts the position of the first pin 140. When the connecting portion 120 of the opposite connecting end is removed, the first pin 140 can automatically extend out to be inserted into the first groove 220, that is, the valve core 200 can be locked at the initial position for mutual insertion of the connecting ends. Specifically, when the valve core 200 rotates to a position where the first groove 220 is aligned with the insertion/removal section 131, the through hole 210 is isolated from the flow channel 110.

In some embodiments, the valve seat 100 is provided with a first mounting groove 150. The first pin 140 includes a first slider 141 and a first elastic member 142. The first slider 141 is slidably mounted in the first mounting groove 150. The first elastic member 142 is arranged between the first slider 141 and the first mounting groove 150 and is configured to push the first slider 141 into the first groove 220. The first elastic member 142 is used to provide a force to push the first sliding member 141 into the first groove 220, so that when the first groove 220 is aligned with the insertion/removal section 131, the first sliding member 141 extends into the first groove 220 under the action of the first elastic member 142. Moreover, with the arrangement of the first elastic member 142, when the first slider 141 extends into the first groove 220, it can produce a clicking sound, thus helping the operator to accurately identify the rotational position of the valve core 200.

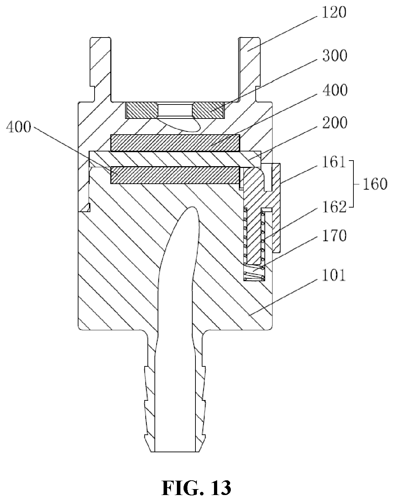

In some embodiments, referring to FIGS. 2, 3, 11, and 13, the valve seat 100 is provided with a second pin 160 that is retractable. The valve core 200 is provided with a second groove 230 corresponding to the second pin 160. That is, the valve core 200 is further provided with a second groove 230, and the second pin 160 is configured to be inserted into the second groove 230 when the valve core 200 rotates to a position where the through hole 210 is aligned with the flow channel 110. By providing the second groove 230 in the valve core 200, when the through hole 210 of the valve core 200 is not communicated with the flow channel 110, the valve core 200 can abut against the second pin 160 to prevent the second pin 160 from extending outward towards the valve core 200. When the valve core 200 rotates to a position where the through hole 210 is aligned with the flow channel 110, the valve core 200 no longer restricts the position of the second pin 160, so the second pin 160 can automatically extend out to be inserted into the second groove 230. This can not only lock the valve core 200 at the position where the connecting ends are mated and opened, but also provide a cue indicating the rotational position of the valve core 200 during operation.

In some embodiments, the valve seat 100 is provided with a second mounting groove 170. The second pin 160 includes a second slider 161 and a second elastic member 162. The second slider 161 is slidably mounted in the second mounting groove 170, and a part of the second slider 161 is located outside the valve seat 100. The second elastic member 162 is arranged between the second slider 161 and the second mounting groove 170, and is configured to push the second slider 161 into the second mounting groove 230. The second elastic member 162 is used to provide a force to push the second slider 161 into the second groove 230, so that when the through hole 210 is aligned with the flow channel 110, the second pin 160 is aligned with the second groove 230, and the second slider 161 extends into the second groove 230 under the action of the second elastic member 162, thereby accurately positioning the valve core 200. Moreover, with the arrangement of the second elastic member 162, when the second slider 161 extends into the second groove 230, it can provide a clicking sound, thus helping the operator to accurately identify the rotational position of the valve core 200. A part of the second slider 161 is located outside the valve seat 100 for easy operation.

In a case where the first pin 140 and the second pin 160 are provided and the valve seat 100 is provided with the engagement slot 130 for engagement with the connecting portion 120, to connect the two connecting ends to each other, the two connecting ends are respectively held by two hands. Each of the connecting portions 120 is inserted into the corresponding engagement slot 130 of the other of the connecting ends, pushing the first pin 140 for positioning the valve core 200 at the initial position out of the end face of the valve core 200. The two hands rotate in opposite directions. At this time, each of the connecting portions 120 drives the valve core 200 of the opposite connecting end to rotate until a clicking sound is heard, that is, the second pin 160 is inserted into the second groove 230 of the valve core 200, precisely positioning the valve core 200. The through hole 210 of the valve core 200 is aligned with and communicated with the flow channel 110, and the two connection ends are simultaneously opened.

To close the two connection ends, the two connecting ends are held with both hands respectively, the second pins 160 of the two connecting ends are moved away from the end faces of the respective valve cores 200 by thumbs to exit the second grooves 230, and both hands rotate in directions opposite to those for connection. At this time, each of the connecting portions 120 drives the valve core 200 of the opposite connecting end to rotate until it rotates to the initial position where the valve is closed, and a clicking sound is heard, that is, the first pin 140 is in a working state. At this time, the two connecting ends are closed simultaneously. The valve cores 200 of the two connecting ends are fully staggered relative to the flow channel 110, and the two connecting ends are fully disconnected from the flow channels 110.

In some embodiments, the part of the second slider 161 located outside the valve seat 100 serves as an operating part. The second slider 161 can be disengaged from the second groove 230 by toggling the operating part. When the second slider 161 is disengaged from the second groove 230, the second slider 161 releases the restriction on the valve core 200. In this case, the valve core 200 is rotatable, and when the valve core 200 is rotated to the initial position where the valve is closed, the connecting portion 120 is located in the corresponding insertion/removal section 131, so that the two connecting ends can be separated from each other.

In other embodiments, the first pin 140 and the second pin 160 may be of other structures capable of extending, retracting, deforming, and resetting, such as elastic sheets and gas springs.

In other embodiments, a mark is provided on an outer circumferential surface of the valve seat 100 to indicate the relative rotation angle. The position of the valve core 200 may be locked by locking the position of the connecting portion 120. For example, the two valve seats 100 are fixedly connected through a snap-fit structure or other structures after being rotated into position. Alternatively, the valve core 200 may be locked by its own damping force. All of these configurations can ensure the reliability of the communication state.

In some embodiments, the end face 100a is further provided with a first sealing ring 300 configured to sealingly couple with the another connecting end. The first sealing ring 300 is provided with a first communication hole 310 corresponding to the flow channel 110, that is, the first sealing ring 300 is provided with a first communication hole 310 in communication with the flow channel 110. By providing the first sealing ring 300, the first sealing ring 300 can achieve sealing between the end faces of the two connecting ends when the two connecting ends are mated with each other, so as to ensure the reliability of the formed fluid connector. The first sealing ring 300 may be, for example, a polytetrafluoroethylene sealing ring.

In some embodiments, second sealing rings 400 are provided in the valve seat 100 at positions corresponding to both ends of the valve core 200, respectively. Each of the second sealing rings 400 is provided with a second communication hole 410 corresponding to the flow channel 110, i.e., each second sealing ring 400 is provided with a second communication hole 410 in communication with the flow channel 110. That is, both ends of the valve core 200 are pressed and sealed by the respective second sealing rings 400, and the entire flow channel 110 is isolated from the external environment, so that the sealing reliability is ensured when the through hole 210 of the valve core 200 is not communicated with the flow channel 110, i.e., when the connecting end is closed, and the communication reliability is ensured when the two connecting ends are mated. The second sealing ring 400 may be, for example, a polytetrafluoroethylene sealing ring.

In some embodiments, the valve seat 100 includes a valve body 101 and a valve cover 102 connected to the valve body 101. The connecting portion 120 and the engagement slot 130 are arranged on the valve cover 102. The end face 100a is located on the valve cover 102. The connecting portion 120 and the engagement slot 130 are arranged close to an edge of the end face 100a. The number of the connecting portion 120 and the number of the engagement slot 130 are both two. The flow channel 110 includes a valve body flow passage 111 provided in the valve body 101 and a valve cover flow passage 112 provided in the valve cover 102. The valve body 101 and the valve cover 102 enclose to define an accommodating cavity. The valve core 200 is arranged in the accommodating cavity, and sealing is formed between the valve core 200 and each of the valve body 101 and the valve cover 102. The valve seat 100 is formed by separate structures, namely the valve body 101 and the valve cover 102, that are coupled with each other, facilitating installation of components such as the valve core 200. When the valve core 200 rotates to a position where at least part of the through hole 210 is communicated with at least part of the valve body flow passage 111 and at least part of the valve cover flow passage 112, the valve body flow passage 111 and the valve cover flow passage 112 are communicated with each other, and the connecting end is opened. When the valve core 200 rotates to a position where the through hole 210 is isolated from each of the valve body flow passage 111 and the valve cover flow passage 112, the valve body flow passage 111 and the valve cover flow passage 112 are isolated from each other, the valve body flow passage 111 is isolated from the external environment, and the connecting end is closed.

In some embodiments, the valve body 101 is in interference fit with the valve cover 102, and a steel ball 180 is arranged on a circumferential surface of the valve body or a circumferential surface of the valve cover where the valve body 101 and the valve cover 102 are coupled with each other. The valve cover 102 and the valve body 101 are assembled by interference fit, thereby facilitating the operation. In practical applications, the connector often bears a torque. In order to improve the torque resistance of the connector, the steel ball 180 is provided as a torque key on the circumferential surface of the valve body or the circumferential surface of the valve cover where the valve body 101 is coupled with the valve cover 102 to withstand the torque during use, thus ensuring the stability of the connection. Specifically, the circumferential surface of the valve body or the circumferential surface of the valve cover is provided with an accommodating groove for accommodating the steel ball 180, so as to facilitate the installation of the steel ball 180.

A fluid connector is further provided according to the present application. In some embodiments, the fluid connector includes a male end and a female end, and each of the male end and the female end is the connecting end as described above. The connecting portion 120 of the male end is configured to be inserted into the first groove 220 of the female end, and the connecting portion 120 of the female end is configured to be inserted into the first groove 220 of the male end. When the male end and the female end rotate relative to each other, the connecting portion 120 of the male end drives the valve core 200 of the female end to rotate, and the connecting portion 120 of the female end drives the valve core 200 of the male end to rotate, so as to synchronously open or close the male end and the female end. The fluid connector includes the connecting end as described above, so the beneficial effects of the fluid connector can be referred to the above embodiments.

Based on the fluid connector or the connecting end according to the above embodiments, a liquid cooling device is further provided according to the present application, which includes the fluid connector or the connecting end as described in any of the above embodiments. As the liquid cooling device includes the fluid connector or the connecting end described in the above embodiments, the beneficial effects of the liquid cooling device can be referred to the above embodiments.

The various embodiments in the specification are described in a progressive way. Each embodiment focuses on its differences from other embodiments, and similar or identical parts between the embodiments can be referred to interchangeably.

The above description of the disclosed embodiments enables those skilled in the art to implement or use the present application. Various modifications to these embodiments are apparent to those skilled in the art. The general principles defined herein can be implemented in other embodiments without departing from the spirit or scope of the present application. Therefore, the present application is not limited to the embodiments shown herein, but is in accordance with the widest scope consistent with the principles and novel features disclosed herein.

## Claims

1. A connecting end, comprising:
a valve seat (100) having a flow channel (110) therein and an end face (100a) that is provided with a connecting portion (120), wherein the valve seat (100) is configured to mate and connect with a valve seat (100) of another connecting end to form a fluid connector; and
a valve core (200) rotatably arranged in the valve seat (100), wherein the valve core (200) is provided with a through hole (210) and a first groove (220), the first groove (220) is configured for insertion of a connecting portion (120) of the valve seat (100) of the another connecting end, the valve core (200) of the valve seat (100) is configured to be rotated by rotation of the connecting portion (120) of the valve seat (100) of the another connecting end to allow communication between at least part of the through hole (210) and at least part of the flow channel (110).

2. The connecting end according to claim 1, wherein the through hole (210) is eccentrically formed in the valve core (200).

3. The connecting end according to claim 1 or 2, wherein
the valve core (200) is configured to be rotated by the connecting portion (120) of the another connecting end, which is inserted into the first groove (220), under an action of an external force; and
the connecting end is opened when the valve core (200) rotates to a position where at least part of the through hole (210) is in communication with at least part of the flow channel (110), and the connecting end is closed when the valve core (200) rotates to a position where the through hole (210) is isolated from the flow channel (110).

4. The connecting end according to claim 2, wherein the end face (100a) is further provided with an engagement slot (130), and the engagement slot (130) is configured to allow the connecting portion (120) of the another connecting end to be inserted into the first groove (220) and rotate along the engagement slot (130), and to axially lock the two valve seats (100) of the two connecting ends.

5. The connecting end according to claim 4, wherein
a notch (121) is provided at an end of a side wall of the connecting portion (120) close to the end face (100a), the engagement slot (130) comprises an insertion/removal section (131) and a locking section (132) connected to each other, and a width of the insertion/removal section (131) is greater than a width of the locking section (132); and
the insertion/removal section (131) is configured for insertion and removal of the connecting portion (120) of the valve seat (100) of the another connecting end, and the locking section (132) is configured to engage with a notch (121) of the connecting portion (120) of the valve seat (100) of the another connecting end.

6. The connecting end according to claim 5, wherein the valve seat (100) is provided with a first pin (140) that is retractable, and the first pin (140) is configured to be inserted into the first groove (220) when the valve core (200) rotates to a position where the first groove (220) is aligned with the insertion/removal section (131).

7. The connecting end according to claim 6, wherein
the valve seat (100) is provided with a first mounting groove (150), the first pin (140) comprises a first slider (141) and a first elastic member (142), and the first slider (141) is slidably mounted in the first mounting groove (150); and
the first elastic member (142) is arranged between the first slider (141) and the first mounting groove (150) and is configured to push the first slider (141) into the first groove (220).

8. The connecting end according to claim 2, 4 or 5, wherein the valve seat (100) is provided with a second pin (160) that is retractable, the valve core (200) is further provided with a second groove (230), and the second pin (160) is configured to be inserted into the second groove (230) when the valve core (200) rotates to a position where the through hole (210) is aligned with the flow channel (110).

9. The connecting end according to claim 8, wherein
the valve seat (100) is provided with a second mounting groove (170), the second pin (160) comprises a second slider (161) and a second elastic member (162), the second slider (161) is slidably mounted in the second mounting groove (170), and a part of the second slider (161) is located outside the valve seat (100); and
the second elastic member (162) is arranged between the second slider (161) and the second mounting groove (170) and is configured to push the second slider (161) into the second groove (230).

10. The connecting end according to claim 9, wherein the part of the second slider (161) located outside the valve seat (100) is configured to serve as an operating part, and the second slider (161) is configured to be disengaged from the second groove (230) by moving the operating part.

11. The connecting end according to claim 2, 4 or 5, wherein the end face (100a) is further provided with a first sealing ring (300) configured to sealingly couple with the another connecting end, and the first sealing ring (300) is provided with a first communication hole (310) in communication with the flow channel (110).

12. The connecting end according to claim 2, 4 or 5, wherein second sealing rings (400) are provided in the valve seat (100) at positions corresponding to both ends of the valve core (200), respectively, and each of the second sealing rings (400) is provided with a second communication hole (410) in communication with the flow channel (110).

13. The connecting end according to claim 4 or 5, wherein
the valve seat (100) comprises a valve body (101) and a valve cover (102) connected to the valve body (101);
the end face (100a) is located on the valve cover (102), the connecting portion (120) and the engagement slot (130) are arranged close to an edge of the end face (100a), and the number of the connecting portion (120) and the number of the engagement slot (130) are both two; and
the flow channel (110) comprises a valve body flow passage (111) provided in the valve body (101) and a valve cover flow passage (112) provided in the valve cover (102), the valve body (101) and the valve cover (102) define an accommodating cavity, the valve core (200) is arranged in the accommodating cavity and is sealed against the valve body (101) and the valve cover (102).

14. The connecting end according to claim 13, wherein the valve body (101) is in interference fit with the valve cover (102), and a steel ball (180) is provided on a circumferential surface of the valve body or a circumferential surface of the valve cover where the valve body (101) is coupled with the valve cover (102).

15. A fluid connector, comprising:
a male end; and
a female end, wherein
each of the male end and the female end is the connecting end according to any one of claims 1 to 14;
the connecting portion (120) of the male end is configured to be inserted into the first groove (220) of the female end, and the connecting portion (120) of the female end is configured to be inserted into the first groove (220) of the male end; and
when the male end and the female end rotate relative to each other, the connecting portion (120) of the male end is configured to drive the valve core (200) of the female end to rotate, and the connecting portion (120) of the female end is configured to drive the valve core (200) of the male end to rotate, so as to synchronously open or close the male end and the female end.

16. A liquid cooling device, comprising the fluid connector according to claim 15 or the connecting end according to any one of claims 1 to 14.
